# EUROPÄISCHE PATENTSCHRIFT

(11) **EP 1 140 725 B1**
(45) Veröffentlichungstag und Bekanntmachung des Hinweises auf die Patenterteilung: **18.08.2004**
(21) Anmeldenummer: 99957933.7
(22) Anmeldetag: 28.10.1999
(51) Int. Cl.: C04B 14/02, C04B 38/06

(54) **VERFAHREN ZUR UMWELTSCHONENDEN VERWERTUNG UND/ODER VERARBEITUNG VON PORÖSEM GRANULAT**
ENVIRONMENTALLY FRIENDLY METHOD FOR UPGRADING AND/OR CONVERTING POROUS GRANULATED MATERIAL
PROCEDE DE VALORISATION ET/OU DE TRANSFORMATION DE GRANULE POREUX, RESPECTANT L'ENVIRONNEMENT

(30) Priorität: 17.11.1998 DE 19852808
(43) Veröffentlichungstag der Anmeldung: 10.10.2001
(73) Patentinhaber: Dobelke, Helmut, 39398 Gross Germersleben (DE)
(72) Erfinder: Dobelke, Helmut, 39398 Gross Germersleben (DE)
(74) Vertreter: Kazzer, Peter
(86) Internationale Anmeldenummer: PCT/DE1999/003415
(87) Internationale Veröffentlichungsnummer: WO 2000/029348

(56) Entgegenhaltungen:
- EP-A- 0 488 105
- EP-A- 0 619 270
- US-A- 3 625 896
- US-A- 3 875 077
- US-A- 5 735 948
- PATENT ABSTRACTS OF JAPAN vol. 1997, no. 12, 25. Dezember 1997 (1997-12-25) & JP 09 208288 A (WATANABE YUMIKO), 12. August 1997 (1997-08-12)
- PATENT ABSTRACTS OF JAPAN vol. 1998, no. 04, 31. März 1998 (1998-03-31) & JP 09 309753 A (OOTOBATSUKUSU SEVEN:KK), 2. Dezember 1997 (1997-12-02)

## Beschreibung

Die Erfindung betriff ein Verfahren zur umweltschonenden Verwertung und/oder Verarbeitung von porösem Granulat, wobei dieses Granulat durch Verschwelung von Altreifen und/oder vergleichbaren Gummierzeugnissen in einem Schwelreaktor erzeugt wird und wobei gegebenenfalls vorhandene Metallbestandteile und aus dem Schwelgas die kondensierbaren Bestandteile abgeschieden werden.

Aus dem Abschlussbericht der Fachhochschule Wiesbaden vom Mai 1994 zum Projekt "Thermische Altreifenverwertung" ist es bekannt, ganze und unzerkleinerte Altreifen in einem Schwelschacht zur Gewinnung von Energie, Öl und sogenanntem Reifenkoks umweltschonend zu verarbeiten.

Im Wesentlichen erfolgt das Verschwelen wirtschaftlich bei Temperaturen zwischen 800 und 900 °C.

Die erzielte Produktverteilung wurde wie folgt angegeben:
- Ca. 60% Schwelgase (z. B. Methan) und Kondensate (z. B. BTX-Fraktionen) sowie
- 40% feste Rückstände, wobei bei der verwendeten Reifensorte 5% auf die Stahldrahteinlage und ca. 35% auf den Reifenkoks entfallen, der seinerseits zu 80% aus aktivierbaren Kohlenstoff besteht.

Es wurde festgestellt, dass im Anschluss an die Verschwelung sich der Reifenkoks äußerst leicht vom Stahl trennen lässt. Daraus resultiert ein Granulat in unterschiedlichster Körnung.
Als Vorteil des Verschwelens von Altreifen wurde ausgeführt, dass auf eine aufwendige Zerkleinerung der Altreifen verzichtet werden kann und die flüchtigen und festen Schwelrückstände umweltschonend in den Wirtschaftskreislauf zurückgeführt werden können.
Des Weiteren wurde ausgeführt, das Granulat zu zermalen und als Staubkoks zu verbrennen. Der Heizwert desselben wurde mit ca. 8 kWh/kg angeben.

Ebenso wurde angeregt das Granulat als Ausgangsstoff für die Herstellung technischer Aktivkohle zu verwenden. Aufgrund des Vorhandenseins ständig wachsender Altreifenberge und der daraus resultierenden Notwendigkeit zur umweltgerechten Entsorgung bzw. Rückführung in den Wirtschaftskreislauf versteht es sich von selbst, die Verwendung des in großem Umfang anfallenden Granulats nicht auf die genannten Fälle zu beschränken. Aufgabe der Erfindung ist, eine neue Verwendung aufzuzeigen, um poröses Granulat wirtschaftlich verwerten zu können.

Erfindungsgemäß wird die Aufgabe dadurch gelöst, ausschließlich Granulat in Verbindung mit einem hydraulischen oder nichthydraulischen Bindemittel zur Herstellung von leichtgewichtigen Bauelementen und/oder Bauelementen mit in Abhängigkeit des Mischungsverhältnisses in weiten Grenzen beliebig einstellbarer Wärmeleitfähigkeit zu verwenden, wobei der prozentuale Gewichtsanteil des Granulats größer dem Gewichtsanteil des Bindemittels ist. Hier wird insbesondere der aus der Porösität des Granulats resultierende Wärmedämmeffekt vorteilhaft ausgenutzt.

Bekanntermaßen werden Baustoffe, welche insbesondere in einem gewünschten Mischungsverhältnis aus Zuschlagstoffen, wie z.B. Sand und Kies und aus Bindemittel, wie z. B. Zement, Gips oder Kalk bestehen zu beliebigen Bauelementen verarbeitet. Erfindungsgemäß wird Granulat unter Beachtung seiner Eigenschaften als Zuschlagstoff eingesetzt. Daraus resultieren im Wesentlichen Einsparungen an anderen Zuschlagstoffen, wie z. B. Sand und/oder Kies in Abhängigkeit von den Eigenschaften des Granulats und dem gewünschten Mischungsverhältnisses verändern sich insbesondere die Druckfestigkeit und die Wärmeleitfähigkeit des Endprodukts, welches bezüglich der Verwendung dieser Endprodukte zu berücksichtigen ist.
Es ist zu beachten, dass sich Druckfestigkeit und Wärmeleitfähigkeit in Abhängigkeit vom Mischungsverhältnis umgekehrt proportional verhalten.
Einsatzmöglichkeiten werden im Hausbau bei der Herstellung von Bauelementen, im begrenzten Umfang bei der Herstellung von Fundamenten sowie im Straßenbau gesehen.

Bei der versuchsweisen Herstellung von leichtgewichtigen Bauelementen wurde ermittelt, dass eine Mischung von ausschließlich Granulat und Zement als Bindemittel im Verhältnis 2:1 bis 5:1, vorzugsweise 3:1 als geeignet erscheint; um diese Bauelemente in weiten Bereichen des Bauwesens zur Wärmeisolierung nutzen zu können.
Vorteilhaft können entsprechend gefertigte Produkte als Wärmeisolierplatten in Fußböden, als leichte Bauplatten bei der Herstellung von Außen- und Innenwänden von Gebäuden sowie als Isolierplatten an Außenwänden bei der nachträglichen Sanierung von Altbauten eingesetzt werden.

## Patentansprüche

1. Verfahren zur umweltschonenden Verwertung und/oder Verarbeitung von porösem Granulat, erzeugt durch Verschwelung von Altreifen und/oder vergleichbaren Gummierzeugnissen in einem Schwelreaktor, wobei gegebenenfalls vorhandene Metallbestandteile und aus dem Schwelgas die kondensierbaren Bestandteile abgeschieden werden, wobei ausschließlich Granulat in Verbindung mit einem hydraulischen oder nichthydraulischen Bindemittel zur Herstellung von leichtgewichtigen Bauelementen und/oder Bauelementen mit in Abhängigkeit des Mischungsverhältnisses in weiten Grenzen beliebig einstellbarer Wärmeleitfähigkeit verwendet wird, wobei der Gewichtsanteil des Granulats größer dem Gewichtsanteil des Bindemittels ist.

## Claims

1. Method for the environmentally compatible utilisation and/or processing of porous granules produced by low-temperature carbonisation of waste tyres and/or similar rubber products in a low-temperature carbonisation reactor, wherein metal parts contained, if any, are removed and any condensable components are separated from the low-temperature carbonisation gas by employing exclusively granules in combination with a hydraulic and non-hydraulic binder to produce light-weight building components and/or building components with a thermal conductivity which, depending on the mixing ratio, can be adjusted as required over a wide range, with the weight percentage of the granules being higher than the weight percentage of the binder.

## Revendications

1. Procédé ayant pour but la valorisation et/ou le traitement de façon écologique de granulats poreux obtenus par la carbonisation à basse température de pneumatiques usagés et/ou de produits en caoutchouc comparables dans un four de carbonisation à basse température, les particules métalliques et les composés condensables contenus dans le gaz de carbonisation à basse température étant, le cas échéant, triés, le seul produit utilisé pour la fabrication d'éléments de construction légers et/ou ayant une conductivité thermique largement variable à discrétion en fonction du rapport de mélange, étant des granulats en combinaison avec un liant hydraulique ou non hydraulique, le pourcentage massique des granulats étant supérieur à celui du liant.
